# FASCICULE DE BREVET EUROPEEN

(11) **EP 1 232 890 B1**
(45) Date de publication et mention de la délivrance du brevet: **19.01.2005**
(21) Numéro de dépôt: 02290383.5
(22) Date de dépôt: 18.02.2002
(51) Int. Cl.: B60K 6/02

(54) **Boite de vitesses pour vehicule a propulsion hybride**
Schaltgetriebe für ein Hybridfahrzeug
Gearbox for a hybrid vehicle

(30) Priorité: 19.02.2001 FR 0102213
(43) Date de publication de la demande: 21.08.2002
(73) Titulaire: Peugeot Citroen Automobiles SA, 92200 Neuilly sur Seine (FR)
(72) Inventeur: Petiot, Jean-Paul, 91460 Marcoussis (FR)
(74) Mandataire: Le Forestier, Eric

(56) Documents cités:
- EP-A- 0 845 618
- EP-A- 1 068 978
- WO-A-01/03962
- US-A- 6 159 127

## Description

La présente invention concerne une boîte de vitesses pour un véhicule à propulsion hybride.

Par l'expression "propulsion hybride", on entendra dans la présente description, et dans les revendications qui suivent, une propulsion qui est réalisée à partir d'un moteur thermique et/ou d'un moteur électrique, le véhicule étant équipé de ces deux types de moteur.

Une boîte de vitesses qui fait l'objet de l'invention est du type comportant des lignes primaire et secondaire parallèles, à savoir une ligne primaire motrice et une ligne secondaire réceptrice du mouvement, laquelle entraîne un différentiel qui commande à son tour les roues motrices du véhicule.

Le moteur électrique d'un groupe motopropulseur hybride est généralement implanté dans la boîte de vitesses ou dans le carter d'embrayage, ou encore dans le carter de convertisseur si la boîte de vitesses est automatique.

Ceci permet d'assurer une liaison mécanique directe entre le moteur électrique et la boîte de vitesses, mais entraîne un allongement considérable de l'ensemble de la transmission. L'implantation du groupe motopropulseur dans le bloc avant du véhicule est rendue difficile et nécessite une restructuration parfois globale du groupe motopropulseur.

Ainsi, le document WO 01/03962 représentant l'état de la technique le plus proche décrit un dispositif, de transmission associé à un moteur thermique et à un moteur électrique.

Le moteur thermique entraîne un premier arbre qui porte une série de pignons de la boite de vitesses et le moteur électrique entraîne un deuxième arbre qui porte l'autre série de pignons de la boite de vitesses. Le dispositif de transmission comprend également un arbre de sortie qui peut être relié au premier ou au deuxième arbre. Ainsi, chacun des arbres reliés au moteur thermique ou au moteur électrique peut être soit un arbre menant, soit un arbre mené.

De plus, le dispositif de transmission n'est pas conçu pour être compact. L'introduction d'une deuxième source de puissance, électrique, en bout d'arbre, allonge au contraire le système de transmission.

C'est pourquoi des solutions ont déjà été proposées pour augmenter la compacité.

On peut notamment citer le document FR-92 04484 qui décrit un groupe motopropulseur comportant un moteur thermique et un moteur électrique. Ce moteur électrique est monté au-dessus de la boîte de vitesses, dont l'arbre primaire est solidaire du moteur thermique. Le moteur électrique est par ailleurs accouplé à l'arbre secondaire de cette boîte de vitesses par l'intermédiaire de moyens réducteurs.

On peut également citer le document FR-97 16265 qui décrit un dispositif de transmission pour véhicules à propulsion hybride, dans lequel le moteur électrique est également disposé au-dessus de la boîte de vitesses dont l'arbre primaire est relié au moteur thermique. Par l'intermédiaire de pignons prévus dans le carter de la boîte de vitesses et de l'arbre primaire, la puissance motrice du moteur électrique peut être transmise à l'arbre secondaire de la boîte de vitesses.

Ainsi, les dispositifs prévus dans ces deux documents permettent d'éviter une liaison en rotation du moteur électrique en bout d'arbre, ce qui contribue à la compacité du dispositif, malgré la présence d'un moteur électrique.

L'invention a pour but de proposer une boîte de vitesses de type ci-dessus indiqué, qui offre de meilleures conditions de roulage et davantage de rapports de vitesse, tout en maintenant la compacité de l'ensemble et en ne nécessitant que des adaptations simples des boîtes de vitesses classiques conçues pour être entraînées par un moteur thermique.

Ainsi, l'invention concerne une boîte de vitesses pour véhicule à propulsion hybride, réalisée à partir d'un moteur thermique et/ou d'un moteur électrique, qui comporte au moins une première ligne primaire motrice entraînée en rotation par le moteur thermique et par l'intermédiaire d'un embrayage, ainsi qu'une ligne secondaire réceptrice du mouvement.

Selon l'invention, la boîte de vitesses comporte une deuxième ligne primaire motrice, les lignes primaires et la ligne secondaire étant parallèles, la deuxième ligne primaire étant entraînée en rotation par le moteur électrique et par l'intermédiaire d'un système de transmission, et comprenant un arbre menant qui porte à l'une de ses extrémités des moyens de liaison en rotation avec la ligne secondaire, et ledit système de transmission permettant de transmettre la puissance du moteur électrique à l'arbre menant, soit en totalité, soit selon un rapport de démultiplication déterminé.

De préférence, le système de transmission comporte:
- un arbre qui porte un premier pignon fou,et qui est solidaire en rotation de l'arbre menant,
- un deuxième pignon qui est porté par l'arbre de rotor du moteur électrique dont il est solidaire en rotation,
- un baladeur susceptible de solidariser 1' arbre du système de transmission avec l'arbre du rotor ou le premier pignon fou, et
- une ligne intermédiaire portant deux pignons qui en sont solidaires en rotation et qui engrènent avec les premier et deuxième pignons.

Dans une première variante de réalisation, le système de transmission est disposé à une extrémité du moteur électrique, opposée aux moyens de liaison en rotation entre l'arbre menant de la deuxième ligne primaire et la ligne secondaire.

Dans ce cas, l'arbre du rotor du moteur électrique est tubulaire et entoure l'arbre du système de transmission.

Dans une deuxième variante de réalisation de cette boîte de vitesses, le système de transmission est disposé entre le moteur électrique et les moyens de liaison en rotation entre l'arbre menant de la deuxième ligne primaire et la ligne secondaire.

Dans ce cas, l'arbre du rotor du moteur électrique , l'arbre du système de transmission et l'arbre menant sont alors avantageusement sensiblement alignés.

Les moyens de liaison en rotation entre la deuxième ligne primaire et la ligne secondaire comprennent, par exemple, un pignon porté par l'arbre menant de la deuxième ligne primaire, un autre pignon porté par l'arbre mené de la ligne secondaire et une courroie reliant les deux pignons.

L'invention concerne également un groupe motopropulseur pour véhicule à propulsion hybride comprenant un moteur thermique et un moteur électrique disposé à la périphérie de la boîte de vitesses du véhicule, cette boîte de vitesses étant conforme à celle décrite précédemment.

De préférence, la deuxième ligne primaire et le moteur électrique sont situés au-dessus de la première ligne primaire et de la ligne secondaire.

L'invention sera mieux comprise et d'autres buts, avantages et caractéristiques de celle-ci apparaîtront plus clairement de la description qui suit et qui est faite en référence aux dessins annexés représentant des exemples de réalisation de l'invention et sur lesquels:
- la figure 1 est une vue générale, schématique, d'une première variante de réalisation de la boîte de vitesses selon l'invention et
- la figure 2 est une vue générale, schématique, d'une deuxième variante de réalisation du système de transmission selon l'invention.

Les éléments communs aux deux figures seront désignés par les mêmes références.

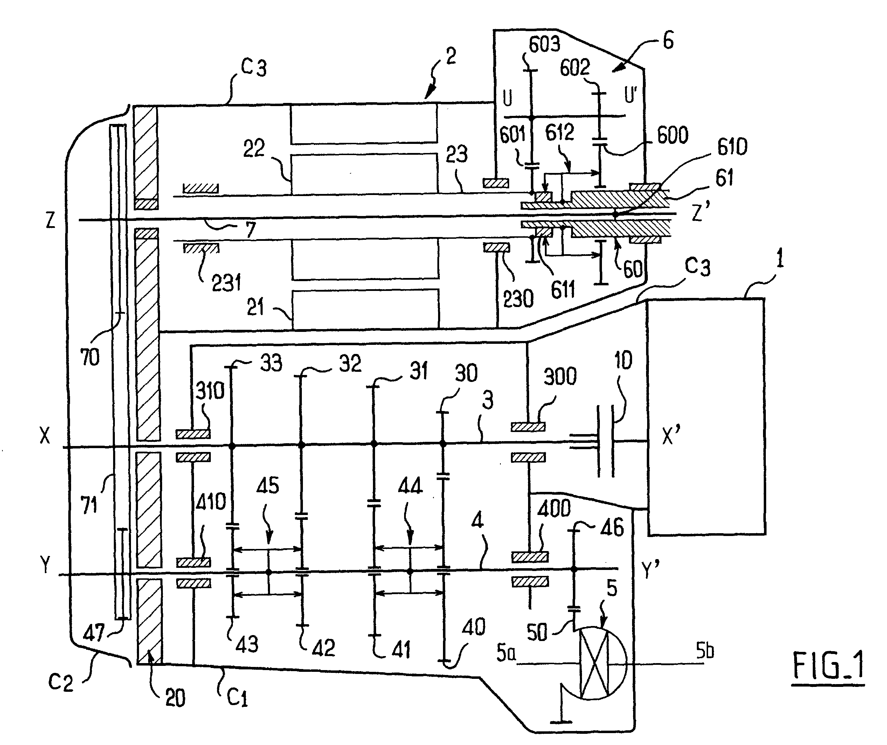

Sur la figure 1, sont désignés par les références XX' et ZZ', respectivement YY', les première et deuxième lignes primaires, respectivement, la ligne secondaire de la boîte de vitesses.

Ces trois lignes sont parallèles, disposées à proximité l'une de l'autre.

Dans l'exemple illustré, la deuxième ligne primaire ZZ' est placée au-dessus de la première ligne primaire XX', elle-même placée au-dessus de la ligne secondaire YY'.

Le moteur thermique qui est, par exemple, un moteur à quatre temps, porte la référence 1, tandis que le moteur électrique porte la référence 2.

La première ligne primaire XX' est liée en rotation au moteur électrique 1, tandis que la deuxième ligne primaire ZZ' est liée en rotation au moteur électrique 2.

Le moteur électrique 2 est ici disposé au-dessus de la première ligne primaire XX' et de la ligne secondaire YY'.

L'invention n'est pas limitée à cette disposition, étant entendu que le moteur électrique n'est pas situé en bout de la première ligne primaire XX' et n'est donc pas relié à elle par une liaison directe, mais qu'il est au contraire disposé de façon décalée par rapport à la première ligne primaire et à la ligne secondaire. De façon plus générale, le moteur électrique peut être disposé à un endroit quelconque de la périphérie de la boîte de vitesses.

C'est pourquoi la boîte de vitesses comporte des moyens de liaison en rotation entre la deuxième ligne primaire ZZ' et la ligne secondaire YY' qui seront décrits ultérieurement.

Par ailleurs, pour réduire l'encombrement de l'ensemble, le diamètre du moteur électrique 2 est, de préférence, inférieur à sa longueur.

La première ligne primaire XX' comprend un arbre menant 3 qui est entraîné en rotation par le moteur thermique 1, ceci par l'intermédiaire d'un embrayage 10 de type connu. L'embrayage est disposé dans un carter C3.

L'arbre menant 3 porte quatre pignons de diamètres différents 30, 31, 32 et 33. Ces quatre pignons sont solidaires en rotation de l'arbre 3.

Par ailleurs, un palier 300 assure le guidage d'une extrémité de l'arbre 3, du côté de l'embrayage 10, tandis que le palier 310 assure le guidage de l'arbre 3, à son autre extrémité. Ces deux paliers 300 et 310 sont portés par le carter C1.

La ligne secondaire YY' comporte un arbre mené 4, guidé en rotation dans des paliers 400, 410 à ses deux extrémités et convenablement immobilisé en translation.

Ces deux paliers 400 et 410 sont portés par le carter C1.

L'arbre 4 porte deux paires de pignons 40, 41; 42, 43 qui sont chacun en prise avec un pignon 30, 31, 32, respectivement 33 de la première ligne primaire XX'.

Les pignons 40 à 43 sont normalement montés fous sur l'arbre 4.

Il est prévu un baladeur 44, respectivement 45 interposé entre chaque paire de pignons 40, 41 respectivement 42, 43 et solidaire en rotation de l'arbre 4.

Par exemple, par déplacement du baladeur 44, dans un sens ou dans l'autre, suivant la direction longitudinale YY', il est possible de solidariser en rotation ce baladeur 44 et, corrélativement, l'arbre 4 avec l'un des deux pignons 40 ou 41, ceci de manière sélective.

Par ailleurs, l'arbre 4 porte un pignon 46 qui est situé au-delà du palier 400. Ce pignon 46 engrène avec la couronne 50 du différentiel 5.

Le différentiel 5 entraîne deux demi-essieux 5a, 5b qui portent chacun l'une des roues motrices du véhicule.

On va maintenant s'intéresser à la deuxième ligne primaire ZZ' de la boîte de vitesses selon l'invention.

La deuxième ligne primaire ZZ' comporte un arbre menant 7 qui est entraîné par le moteur électrique 2, par l'intermédiaire d'un système de transmission 6.

Par ailleurs, cet arbre menant 7 est lié en rotation à la ligne secondaire YY', par l'intermédiaire d'un pignon 70 porté par l'arbre 7, d'un pignon 47 porté par l'arbre mené 4 et d'une chaîne 71 reliant les deux pignons.

Bien entendu, l'invention n'est pas limitée à ce mode de réalisation et les moyens de liaison en rotation entre la deuxième ligne primaire ZZ' et la ligne secondaire YY' pourraient être d'une construction différente et se présenter notamment sous la forme de plusieurs pignons.

On constate que, dans la boîte de vitesses selon l'invention, le pignon 47 occupe l'espace du pignon correspondant à un cinquième rapport de vitesse, dans une boîte de vitesses classique entraînée par un moteur thermique et comportant cinq rapports de vitesse.

La boîte de vitesses selon l'invention ne présente donc pas une dimension transversale plus importante qu'une telle boîte de vitesses classique.

La référence 20 désigne une semelle porteuse qui est utilisée pour supporter le moteur électrique 2 et son système de transmission 6.

Comme l'illustre la figure 1, les arbres menants 3 et 7 et l'arbre mené 4 traversent cette semelle porteuse.

De plus, les pignons 47, respectivement 70 portés par les arbres 4, respectivement 7 sont situés au-delà de cette semelle porteuse et sont contenus dans un carter C2 qui prend appui sur cette semelle porteuse 20.

Le moteur électrique 2 comporte un stator 21 qui est supporté par le carter C3, lui-même porté par la semelle 20.

Le stator 21 entoure le rotor 22.

Le rotor 22 comporte un arbre tubulaire 23 qui est guidé en rotation par un palier 231 situé entre la semelle 20 et le moteur électrique 2 et par un autre palier 230 disposé de l'autre côté du moteur électrique 2 et qui est porté par le carter C3.

Dans le mode de réalisation illustré à la figure 1, le système de transmission 6 est situé, par rapport au moteur électrique 2, du côté opposé aux moyens de liaison en rotation entre la deuxième ligne primaire ZZ' et la ligne secondaire YY'.

Ce système de transmission 6 se trouve donc ici au-dessus du carter C3 de l'embrayage 10. Ceci permet d'utiliser l'espace qui est disponible en regard de ce carter C3.

Ce système de transmission 6 comporte donc un arbre 60 qui porte un premier pignon fou 600.

L'arbre 60 est représenté sous la forme d'un arbre tubulaire sur la figure 1. Il pourrait également être conçu sous la forme d'un arbre plein sans sortir du cadre de la présente invention.

Un deuxième pignon 601 est porté par l'arbre tubulaire 23 du rotor 22.

L'arbre 60 est solidaire en rotation de l' arbre menant 7 grâce à des moyens portant la référence 610.

L'arbre tubulaire 60 est monté libre en rotation par rapport à l'arbre 23 du rotor 2, par l'intermédiaire du palier 611.

Un baladeur 612 est interposé entre l'arbre 23 du rotor et l' arbre 60. Ce baladeur 612 est solidaire en rotation de l' arbre 60.

Par déplacement du baladeur 612, dans un sens ou dans l'autre, suivant la direction ZZ', il est possible de solidariser en rotation ce baladeur 612 et, corrélativement, l'arbre 60, avec l'arbre 23 du rotor ou avec le premier pignon 600, ceci de manière sélective.

Le fonctionnement du système de transmission 6 est le suivant.

Lorsque le baladeur 612 est déplacé vers le moteur électrique 2, l'arbre 23 du rotor et l'arbre 60 sont solidaires en rotation, tandis que le premier pignon 600 est fou.

Ainsi, lorsque le moteur électrique 2 fonctionne, sa puissance est transmise à l'arbre menant 7 de la deuxième ligne primaire ZZ', par l'intermédiaire de l'arbre du rotor 23 et de l'arbre 60; l'arbre 7, l'arbre du rotor 23 et l'arbre 60 étant tous les trois solidaires en rotation.

Ceci donne une première vitesse électrique qui est une vitesse longue.

Lorsque le baladeur 612 est déplacé du côté opposé au moteur électrique 2, l'arbre 60 est solidarisé en rotation avec le premier pignon 600.

Ainsi, dans ce mode de fonctionnement, le pignon 601 est entraîné par l'arbre de rotor 23.

Ce pignon 601 engrène avec le pignon 603 de la ligne UU', ce qui entraîne en rotation le pignon 602.

Le pignon 602 engrène avec le pignon 600, lequel entraîne en rotation l'arbre 60,et par là l'arbre menant 7, puisque l' arbre 60 et l'arbre 7 sont solidaires en rotation.

Ceci donne la deuxième vitesse électrique, qui est une vitesse courte.

Le rapport de démultiplication peut être de 1 pour la première vitesse électrique (vitesse longue) et de 1/4 pour la deuxième vitesse électrique (vitesse courte).

Ainsi, la boîte de vitesses selon l'invention permet de disposer de deux rapports de vitesse électriques, indépendamment du moteur thermique.

En pratique, la première vitesse peut être utilisée pour démarrer le véhicule, tandis que la deuxième vitesse permet d'obtenir la vitesse maximale du véhicule.

Ces deux vitesses électriques permettent également d'assurer la transition lors du passage d'une vitesse thermique à une autre, sans rupture de couple.

Par ailleurs, le système de transmission peut être conçu pour plus de deux rapports de vitesse.

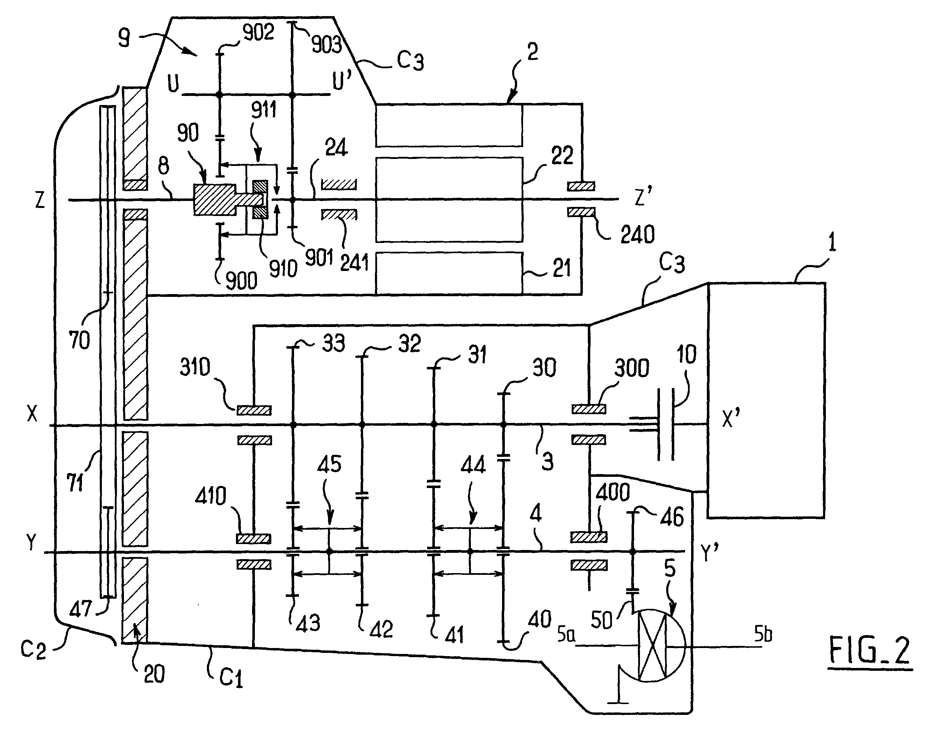

On se réfère maintenant à la figure 2 qui illustre une deuxième variante de réalisation de la boîte de vitesses selon l'invention.

La structure générale de la boîte de vitesses n'est pas modifiée, notamment en ce qui concerne les première et deuxième lignes primaires XX' et ZZ', la ligne secondaire YY', la liaison en rotation entre la deuxième ligne primaire ZZ' et la ligne secondaire YY' et la disposition relative du moteur électrique 2 et du moteur thermique 1.

Par contre, le système de transmission 9 entre le moteur électrique 2 et l'arbre menant 8 de la deuxième ligne primaire ZZ' est situé entre le moteur électrique 2 et les moyens de liaison en rotation entre la deuxième ligne primaire ZZ' et la ligne secondaire YY'.

Dans cette variante de réalisation, la boîte de vitesses peut être moins compacte que celle illustrée à la figure 1.

En effet, il est possible que l'encombrement du carter d'embrayage C3 ne permette pas de déplacer suffisamment le moteur électrique 2 vers le moteur thermique 1.

Dans ce cas, les deux lignes primaires et la ligne secondaire doivent être rallongées pour intégrer le système de transmission. C'est la situation illustrée à la figure 2.

Dans cette variante de réalisation, l'arbre 24 du rotor 22 du moteur électrique 2 est plein et sensiblement aligné avec l'arbre menant 8 de la deuxième ligne primaire ZZ'.

Le système de transmission 9 comporte un arbre 90 qui porte un premier pignon fou 900.

Dans l'exemple illustré à la figure 2, l'arbre 90 est un arbre plein . Il pourrait également être conçu sous la forme d'un arbre tubulaire sans sortir du cadre de la présente invention.

L'arbre 90 est solidaire en rotation de l'arbre menant 8.

L'arbre 90 est monté libre en rotation par rapport à l'arbre du rotor 24 par l'intermédiaire d'un palier 910.

Par ailleurs, l'arbre du rotor 24 porte un deuxième pignon 901 qui est solidaire en rotation de cet arbre.

Enfin, ces deux pignons 900 et 901 engrènent avec deux pignons 902 et 903 qui sont portés par la ligne intermédiaire UU', en en étant solidaires en rotation.

Un baladeur 911, porté par l'arbre 90, est interposé entre les pignons 900 et 901.

Il permet de solidariser sélectivement le premier pignon 900 avec l'arbre 90 ou l'arbre 90 avec l'arbre 24 du rotor.

Le fonctionnement du système de transmission est le suivant.

Lorsque le baladeur 911 est déplacé vers le moteur électrique 2 et que le moteur électrique 2 fonctionne, la puissance du moteur électrique 2 est totalement transmise à l'arbre 8, par l'intermédiaire de l'arbre 90 qui est solidaire des arbres 24 et 8.

L'arbre 8 entraîne la ligne secondaire YY' par les moyens de liaison en rotation 70, 71 et 47 qui ont été précédemment décrits en référence à la figure 1, selon une première vitesse (longue).

Lorsque le baladeur 911 est déplacé vers la semelle 20, le pignon 900 est rendu solidaire de l'arbre 90.

Dans ce mode de fonctionnement, le pignon 901 est entraîné par l'arbre de rotor 24.

Ce pignon engrène avec le pignon 903 de la ligne intermédiaire UU', ce qui entraîne en rotation le pignon 902 de cette même ligne intermédiaire.

Ce pignon 902 engrène alors avec le pignon 900, ce qui entraîne en rotation l'arbre menant 8, l'arbre 90 et l'arbre menant 8 étant solidaires en rotation.

Ceci donne une deuxième vitesse (courte).

Ceci permet donc, comme pour la première variante de réalisation illustrée à la figure 1, de disposer de deux rapports de vitesse électriques, avec les avantages correspondants.

Les signes de référence insérés après les caractéristiques techniques figurant dans les revendications ont pour seul but de faciliter la compréhension de ces dernières et ne sauraient en limiter la portée.

## Revendications

1. Boîte de vitesses pour véhicule à propulsion hybride, réalisée à partir d'un moteur thermique et/ou d'un moteur électrique, qui comporte au moins une première ligne primaire (XX') motrice entraînée en rotation par le moteur thermique (1) et par l'intermédiaire d'un embrayage (10), ainsi qu'une ligne secondaire (YY') réceptrice du mouvement, **caractérisée en ce qu'**elle comporte une deuxième ligne primaire (ZZ') motrice, les lignes primaires (XX', ZZ') et la ligne secondaire (YY') étant parallèles, cette deuxième ligne primaire (ZZ') étant entraînée en rotation par le moteur électrique (2) et par l'intermédiaire d'un système de transmission (6, 9), et comprenant un arbre menant (7, 8) qui porte à l'une de ses extrémités des moyens (70) de liaison en rotation avec la ligne secondaire (YY'), et ledit système de transmission (6, 9) permettant de transmettre la puissance du moteur électrique (2) à l'arbre menant (7, 8), soit sans démultiplication, soit selon un rapport de démultiplication déterminé.

2. Boîte de vitesses selon la revendication 1, **caractérisée en ce que** le système de transmission (6,9) comporte:
- un arbre (60, 90) qui porte un premier pignon fou (600, 900) et qui est solidaire en rotation de l'arbre menant (7, 8),
- un deuxième pignon (601, 901) qui est porté par l'arbre de rotor (23, 24) du moteur électrique (2) dont il est solidaire en rotation,
- un baladeur (612, 911) susceptible de solidariser l'arbre (60, 90) avec l'arbre du rotor (23, 24) ou avec le premier pignon fou (600, 900), et
- une ligne intermédiaire (UU') portant deux pignons (602, 603; 902, 903) qui en sont solidaires en rotation et qui engrènent avec les premier et deuxième pignons (600, 601 ; 900, 901).

3. Boîte de vitesses selon la revendication 1 ou 2, **caractérisée en ce que** le système de transmission (6) est disposé à une extrémité du moteur électrique (2), opposée aux moyens (70) de liaison en rotation entre l'arbre menant (7) de la deuxième ligne primaire et la ligne secondaire (YY').

4. Boîte de vitesses selon la revendication 3, **caractérisée en ce que** l'arbre (23) du rotor du moteur électrique (2) est tubulaire et entoure l'arbre (60) du système de transmission (6).

5. Boîte de vitesses selon la revendication 1 ou 2, **caractérisée en ce que** le système de transmission (9) est disposé entre le moteur électrique (2) et les moyens (70) de liaison en rotation de l'arbre menant (8) de la deuxième ligne primaire avec la ligne secondaire (YY').

6. Boîte de vitesses selon la revendication 5, **caractérisée en ce que** l'arbre (24) du rotor du moteur électrique (2) , l'arbre (90) du système de transmission (9) et l'arbre menant (8) sont sensiblement alignés.

7. Boîte de vitesses selon l'une des revendications 1 à 6, **caractérisée en ce que** les moyens de liaison en rotation entre la deuxième ligne primaire (ZZ') et la ligne secondaire (YY') comprennent un pignon (70) porté par l'arbre menant (7, 8) de la deuxième ligne primaire, un autre pignon (47) porté par l'arbre mené (4) de la ligne secondaire (YY') et une courroie (71) de liaison entre ces deux pignons.

8. Groupe motopropulseur pour véhicule à propulsion hybride comportant un moteur thermique (1) et un moteur électrique (2) disposé à la périphérie de la boîte de vitesses du véhicule, cette boîte de vitesses étant conforme à l'une des revendications 1 à 7.

9. Groupe motopropulseur selon la revendication 8, dans lequel le moteur électrique (2) et la deuxième ligne primaire (ZZ') sont situés au-dessus de la première ligne primaire (XX') et de la ligne secondaire (YY').

## Claims

1. Gearbox for a hybrid-propulsion vehicle whose propulsion is provided by an internal combustion engine and/or an electric motor, the gearbox comprising at least a first primary drive line (XX') rotated by the internal combustion engine (1) and via a clutch (10), and a secondary line (YY') which receives the movement, **characterized in that** it comprises a second primary drive line (ZZ'), the primary lines (XX', ZZ') and the secondary line (YY') being parallel, this second primary line (ZZ') being rotated by the electric motor (2) and via a transmission system (6, 9) and comprising a drive shaft (7, 8) which bears at one of its ends means (70) for rotational connection with the secondary line (YY'), and the said transmission system (6, 9) enabling the power from the electric motor (2) to be transmitted to the drive shaft (7, 8) either without reduction or at a specified reduction ratio.

2. Gearbox according to Claim 1, **characterized in that** the transmission system (6, 9) comprises:
- a shaft (60, 90) which bears a first idler gear (600, 900) and which is locked in rotation with the drive shaft (7, 8),
- a second gear (601, 901) which is borne by the rotor shaft (23, 24) of the electric motor (2) and with which it is locked in rotation,
- a sliding gear (612, 911) which can secure the shaft (60, 90) to the rotor shaft (23, 24) or to the first idler gear (600, 900), and
- an intermediate line (UU') bearing two gears (602, 603; 902, 903) which are locked in rotation therewith and which mesh with the first and second gears (600, 601; 900, 901).

3. Gearbox according to Claim 1 or 2, **characterized in that** the transmission system (6) is arranged at one end of the electric motor (2) away from the means (70) for rotational connection between the drive shaft (7) of the secondary primary line and the secondary line (YY').

4. Gearbox according to Claim 3, **characterized in that** the shaft (23) of the rotor of the electric motor (2) is tubular and surrounds the shaft (60) of the transmission system (6).

5. Gearbox according to Claim 1 or 2, **characterized in that** the transmission system (9) is arranged between the electric motor (2) and the means (70) for rotational connection of the drive shaft (8) of the second primary line with the secondary line (YY').

6. Gearbox according to Claim 5, **characterized in that** the shaft (24) of the rotor of the electric motor (2), the shaft (90) of the transmission system (9) and the drive shaft (8) are substantially aligned.

7. Gearbox according to one of Claims 1 to 6, **characterized in that** the means for rotational connection between the second primary line (ZZ') and the secondary line (YY') comprise a gear (70) borne by the drive shaft (7, 8) of the second primary line, another gear (47) borne by the driven shaft (4) of the secondary line (YY') and a belt (71) providing the connection between these two gears.

8. Powertrain for a hybrid-propulsion vehicle comprising an internal combustion engine (1) and an electric motor (2) arranged at the periphery of the gearbox of the vehicle, this gearbox being in accordance with one of Claims 1 to 7.

9. Powertrain according to Claim 8, in which the electric motor (2) and the second primary line (ZZ') are situated above the first primary line (XX') and the secondary line (YY').

## Patentansprüche

1. Schaltgetriebe für ein Fahrzeug mit Hybridantrieb, der mittels einem Verbrennungsmotor und/oder einem Elektromotor ausgeführt ist, das wenigstens einen ersten Primärantriebsstrang (XX'), der durch den Verbrennungsmotor (1) und mittels einer Kupplung (10) drehend angetrieben wird, sowie einen Sekundärstrang (YY') für die Aufnahme der Bewegung umfaßt, **dadurch gekennzeichnet, daß** es einen zweiten Primärantriebsstrang (ZZ') umfaßt, wobei die Primärstränge (XX', ZZ') und der Sekundärstrang (YY') parallel sind, wobei dieser zweite Primärstrang (ZZ') durch den Elektromotor (2) und mittels einem Getriebesystem (6, 9) drehend angetrieben wird, und eine Antriebswelle (7, 8) umfaßt, die an einem ihrer Enden Mittel (70) zur drehenden Verbindung mit dem Sekundärstrang (YY') trägt, und wobei das Getriebesystem (6, 9) es gestattet, die Leistung des Elektromotors (2) entweder ohne eine Untersetzung oder mit einem festgelegten Untersetzungsverhältnis auf die Antriebswelle (7, 8) zu übertragen.

2. Schaltgetriebe nach Anspruch 1, **dadurch gekennzeichnet, daß** das Getriebesystem (6, 9) folgendes umfaßt:
- eine Welle (60, 90), auf der ein erstes loses Zahnrad (600, 900) sitzt und die bezüglich Drehungen fest mit der Antriebswelle (7, 8) verbunden ist,
- ein zweites Zahnrad (601, 901), das auf der Rotorwelle (23, 24) des Elektromotors (2) sitzt, mit der es bezüglich Drehungen fest verbunden ist,
- eine Schubgabel (612, 911), die dazu fähig ist, die Welle (60, 90) fest mit der Rotorwelle (23, 24) oder mit dem ersten losen Zahnrad (600, 900) zu verbinden, und
- ein Zwischenstrang (UU'), auf dem zwei Zahnräder (602, 603; 902, 903) sitzen, die mit ihm bezüglich Drehungen fest verbunden sind und die mit dem ersten und zweiten Zahnrad (600, 601; 900, 901) im Eingriff sind.

3. Schaltgetriebe nach Anspruch 1 oder 2, **dadurch gekennzeichnet, daß** das Getriebesystem (6) an einem Ende des Elektromotors (2) angeordnet ist, das entgegengesetzt zu den Mitteln (70) zur drehenden Verbindung zwischen der Antriebswelle (7) des zweiten Primärstranges und dem Sekundärstrang (YY') liegt.

4. Schaltgetriebe nach Anspruch 3, **dadurch gekennzeichnet, daß** die Rotorwelle (23) des Elektromotors (2) rohrförmig ist und die Welle (60) des Getriebesystems (6) umgibt.

5. Schaltgetriebe nach Anspruch 1 oder 2, **dadurch gekennzeichnet, daß** das Getriebesystem (9) zwischen dem Elektromotor (2) und den Mitteln (70) zur drehenden Verbindung der Antriebswelle (8) des zweiten Primärstranges mit dem Sekundärstrang (YY') angeordnet ist.

6. Schaltgetriebe nach Anspruch 5, **dadurch gekennzeichnet, daß** die Rotorwelle (24) des Elektromotors (2), die Welle (90) des Getriebesystems (9) und die Antriebswelle (8) im wesentlichen auf einem Strang liegen.

7. Schaltgetriebe nach einem der Ansprüche 1 bis 6, **dadurch gekennzeichnet, daß** die Mittel zur drehenden Verbindung zwischen dem zweiten Primärstrang (ZZ') und dem Sekundärstrang (YY') folgendes umfassen: ein Zahnrad (70), das auf der Antriebswelle (7, 8) des zweiten Primärstranges sitzt, ein weiteres Zahnrad (47), das auf der angetriebenen Welle (4) des Sekundärstranges (YY') sitzt, und einen Treibriemen (71) zur Verbindung zwischen diesen beiden Zahnrädern.

8. Triebwerksgruppe für ein Fahrzeug mit Hybridantrieb, die folgendes umfaßt: einen Verbrennungsmotor (1) und einen Elektromotor (2), der am Rand des Schaltgetriebes des Fahrzeugs angeordnet ist, wobei dieses Schaltgetriebe gemäß einem der Ansprüche 1 bis 7 aufgebaut ist.

9. Triebwerksgruppe nach Anspruch 8, bei der der Elektromotor (2) und der zweite Primärstrang (ZZ') über dem ersten Primärstrang (XX') und dem Sekundärstrang (YY') angeordnet sind.
